Europäisches Patentamt

European Patent Office

Office européen des brevets

(19)

(11) Veröffentlichungsnummer: **0 170 721**
**B1**

(12) **EUROPÄISCHE PATENTSCHRIFT**

(45) Veröffentlichungstag der Patentschrift: **16.01.91**

(51) Int. Cl.⁵: **G 02 C 5/16**

(21) Anmeldenummer: **84112947.1**

(22) Anmeldetag: **26.10.84**

(54) **Bügelendstück für einen Bügel einer Brillenfassung.**

(30) Priorität: **07.08.84 DE 3429091**

(43) Veröffentlichungstag der Anmeldung:
**12.02.86 Patentblatt 86/07**

(45) Bekanntmachung des Hinweises auf die
Patenterteilung:
**16.01.91 Patentblatt 91/03**

(84) Benannte Vertragsstaaten:
**AT BE CH DE FR GB IT LI LU NL SE**

(56) Entgegenhaltungen:
**DE-C- 662 038**
**GB-A- 261 315**
**US-A-4 389 102**

(73) Patentinhaber: **EYEMETRICS-SYSTEMS AG**
**Steinbockstrasse 4**
**CH-7001 Chur (CH)**

(72) Erfinder: **Anger, Wilhelm**
**Chesa Pas-chüra**
**CH-7500 St. Moritz-Suvretta (CH)**

(74) Vertreter: **Grams, Klaus Dieter, Dipl.-Ing. et al**
**Patentanwaltsbüro Tiedtke-Bühling-Kinne-**
**Grupe-Pellmann-Grams-Struif Winter-Roth**
**Bavariaring 4**
**D-8000 München 2 (DE)**

**Beschreibung**

Die Erfindung bezieht sich auf ein Bügelendstück für einen Bügel einer Brillenfassung. Die
Bügelendstücke einer Brillenfassung haben die
Funktion, die Brillenfassung am Kopf des Brillentträgers festzuhalten und gegen Verrutschen der
Brille nach vorne und unten zu sichern. Bei einer
der häufigsten Bügelformen, dem sogenannten
Golfbügel (siehe DIN 5361, Oktober 1980) besteht
das Bügelende aus einem vom übrigen Bügel
schräg nach hinten verlaufenden abgeflachten
Abschnitt, der unter leichtem seitlichen federnden
Druck am Schädel anliegen soll, und zwar hinter
der breitesten Stelle des Kopfes, damit dann von
den beiden Bügelenden der Brillenfassung unter
Keilwirkung die Fassung nach hinten gezogen
wird. Um bei dieser Wirkungsweise eine hinreichende Festhaltung der Brille am Schädel zu
erreichen, müssen verhältnismäßig große seitliche Drücke auf den Schädel ausgeübt werden, was
zu Druckstellen führen kann und als unangenehm
empfunden wird. Darüber hinaus ist die Sicherung
der Brille am Schädel mittels dieser bekannten
Bügelendstücke unbefriedigend, denn sie können
nicht verhindern, daß die Brille bei heftiger Bewegung des Kopfes verrutscht oder gar herabfällt.

Bekannt sind auch sogenannte Gespinstbügel,
bei denen das Bügelendstück als umwickelte
Drahtfeder ausgebildet ist, die sich über etwas
mehr als 180 Grad erstreckt. Ein solcher Gespinstbügel liegt von hinten am Ohr bzw. in der Mulde
zwischen dem Schädel und der Ohrmuschel an.
Der Gespinstbügel kann so angepaßt sein, daß er
verhältnismäßig geringe Drücke ausübt und somit
als angenehm empfunden wird, während er
zugleich die Brille zuverlässig auch im Falle von
Stößen und heftigen Bewegungen festhält. Nachteilig bei den Gespinstbügeln ist jedoch, daß die
Bügelendstücke beim Aufsetzen verhältnismäßig
mühsam von Hand in ihre Lagen hinter den Ohren
gebracht werden müssen. Darüber hinaus ist die
Herstellung von Gespinstbügeln verhältnismäßig
aufwendig, weswegen sie verhältnismäßig teuer
sind.

Aus der US—PS 4 389 102 ist ein Bügel mit
einem Bügelendstück bekannt, das sowohl
bequem sein soll als auch die Brille zuverläßig
festhalten soll. Dieser bekannte Bügel weist ein
dem Golfbügel ähnliches Bügelendstück auf,
wobei zwischen dem unteren Ende des Bügelendstücksund dessen Übergangsbereich zum übrigen
Bügel ein elastisches, flexibles Band gespannt ist,
das in Anlage in der Mulde zwischen dem Schädel
und der Ohrmuschel treten soll. Bei aufgesetzter
Brille steht dieses band etwas unter Spannung,
wodurch es die Brille elastisch in ihrer gewünschten Lage am Kopf hält. Bei Stößen oder heftigen
Bewegungen kann sich das Band zusätzlich elastisch verformen und aufgrund der gespeicherten
Verformungsenergie die Brille schließlich in ihre
gewünschte Lage zurückbringen. Nachteilig bei
diesem bekannten Bügelendstück ist, daß die
Gefahr besteht, daß sich das elastische Band in die
Haut einschneidet und dadurch zum Unbequemlichkeiten führt. Wenn, um dem vorzubeugen, das
elastische Band dick gemacht wird, wird es verhältnismäßig steif, so daß die Wirkung die eines
normalen Golfbügels ist. Zudem hat dieses
bekannte Bügelendstück den Nachteil, daß die bei
einer elastischen Deformation des Bandes von
diesem ausgeübte Rückstellkraft das Bügelstück nach schräg oben zu drücken versucht, so
daß das Bügelendstück nicht nur nach hinten
zurückgezogen, sondern gleichzeitig auch nach
oben verlagert wird. Der Sitz der Brille muß somit
trotz des elastischen Bandes nach einem Verrükken der Brille korrigiert werden.

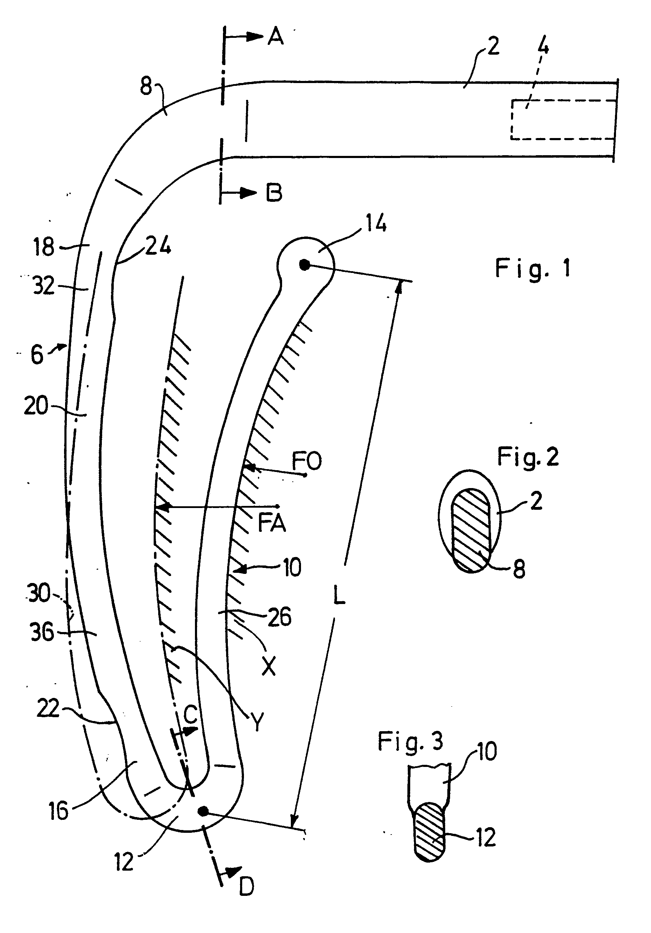

Schließlich ist auch ein Bügelendstück gemäß
dem Oberbegriff von Patentanspruch 1 bekannte
(DE—PS 662 038). Bei diesem bekannten Bügelendstück geht der übrige Bügel gerade in den
ersten Abschnitt über. Der Anlageabschnitt
umgreift das Ohr bogenförmig von hinten. Der
Verbindungsabschnitt ist als schlaufenförmige
Feder ausgebildet, deren Krümmungsinnenseite
zum Ohr weist. Die schlaufenförmige Feder geht
an ihrem oberen Ende unmittelbar in den ersten
Abschnitt über. An ihrem unteren Ende ist sie mit
dem Anlageabschnitt verbunden, und zwar geht
sie dort unmittelbar in den metallischen Kern
desselben über. Ein kurzes Stück der Kunststoffumhüllung des Anlageabschnitts steht mit seinem
freien Ende in Richtung zum ersten Abschnitt vor
(Abb. 3). Bei einer heftigen Kopfbewegung und
einer dadurch verursachten Verlagerung der brille
am Kopf verformt sich der Verbindungsabschnitt,
so daß eine Rückstellkraft auftritt, die die Brille
wieder in ihre Ausgangslage zurückbringen soll.
Günstig bei diesem bekannten Bügelendstück ist,
daß der Anlageabschnitt derart ausgebildet ist,
daß weder die Gefahr des Einschneidens bzw. der
erhöhten Druckbeanspruchung hinter dem Ohr
bestht, noch—im Gegensatz zum Gespinstbüge-
l—ein mühsames Einfädeln des Bügelendstücks
hinter dem Ohr notwendig ist, während jedoch
gleichzeitig für eine gewisse federnde Nachgiebigkeit gesorgt ist, aufgrund derer die Brille federnd
und somit sicherer am Kopf gehalten wird. Auch
bei diesem bekannten Bügelendstück wirkt jedoch
dann, wenn der federnde Verbindungsanschnitt
verformt worden ist, die Rückstellkraft am Bügelendstück nach schräg hinten und oben, so daß der
Rückziehbewegung der Brillenfassung eine Bewegung überlagert ist, bei der die ersten Abschnitte
der Bügelendstücke nach oben gedrückt werden.
Daher ist es auch in diesem Fall häufig notwendig,
den Sitz der Brille zu korrigieren.

Der Erfindung liegt die Aufgabe zugrunde, das
gattungsgemäße Bügelendstück derart auszubilden, daß die damit versehene Brille zuverlässig
gehalten und im Falle einer Verlagerung möglichst
in ihre Ausgangslage zurückgebracht wird, ohne
daß der Tragkomfort beeinträchtigt ist und ohne
daß das Aufsetzen und Abnehmen der Brille
erschwert ist.

Diese Aufgabe wird erfindungsgemäß durch die
Merkmale im kennzeichnenden Teil von Patentanspruch 1 gelöst.

Aufgrund der erfindungsgemäßen Ausbildung

ist der Anlageabschnitt in seinem Mittelbereich oder unterhalb desselben am übrigen Bügelendstück und somit am Bügel abstützt. Zumindest die obere Hälfte des Bügelendstücks steht frei nach oben vor. Diese neuartige Geometrie des Bügelendstücks führt dazu, daß der Anlageabschnitt von schräg unten und hinten gehalten ist und von ihm gegebenenfalls auch nach schräg oben und vorn gerichtete Kräfte ausgeübt werden können und daß sich bei einer durch das Federgelenk, das der gezielt am oder im Übergangsbereich vorgesehene Federbereich bzw. das Federelement bilden, ermöglichten und durch auf den Anlageabschnitt ausgeübte, nach hinten gerichtete Kräfte verursachten Auslenkbewegung des Bügelendstücks das obere, freie Ende des Bügelendstücks am stärksten (im Vergleich zu den übrigen Bereichen des Anlageabschnitts) oder doch zumindest stark verlagert. Dies bedeutet, daß die durch die Auslenkung bewirkte Rückstellkraft, die vom Anlageabschnitt ausgeübt wird bzw. als Reaktionskraft auf diesen wirkt, unter einem um so günstigeren Winkel angreift, je stärker die Auslenkung ist. Der Winkel ist um so günstiger, je geringer die senkrecht nach oben gerichtete, auf das Bügelendstück wirkende Reaktionskraftkomponente ist. Diese wird bei gleichem Betrag der Reaktionskraft um so kleiner, je weiter das obere Ende des Anlageabschnitts nach hinten ausgelenkt ist. Bei dem bekannten Bügelendstück dagegen wird der Anlageabschnitt im Falle einer Auslenkung in einem solchen Sinne verschwenkt, daß der Angriffswinkel der vom Anlageabschnitt ausgeübten Kraft bzw. der Reaktionskraft immer ungünstiger wird.

Wesentlich für das erfindungsgemäße Bügelendstück ist, daß der Anlageabschnitt so gehalten und geführt ist, daß dann, wenn es zu einer Auslenkung des Anlageabschnitts kommt, die Auslenkbewegung nicht zu einer Verschlechterung des Kraftangriffs des Anlageabschnitts führt. Dem sind die Geometrie der Elemente des Bügelendstücks und die Verteilung der Federeigenschaften auf die Elemente des Bügelendstücks angepaßt. Diese Halterung und Führung des Anlageabschnitts ermöglicht es zugleich, daß der Anlageabschnitt sich bei aufgesetzter Brille leicht in die richtige Position ausrichtet und dadurch Druckkonzentrationen vorgebeugt ist. Hierzu gehöhrt auch, daß bei dem erfindungsgemäßen Bügelendstück zur Auslenkung des oberen Endes des Anlageabschnitts um einen bestimmten Betrag die geringste Kraft erforderlich ist, was dazu führt, daß gerade derjenige Bereich des Anlageabschnitts, der gegebenenfalls den vom zugeordneten Bügel abzustützenden Brillengewichtsanteil aufnehmen muß, große bzw. die größte Nachgiebigkeit hat und sich somit leicht in eine optimale Stellung einstellen kann.

Die erfindungsgemäße Ausbildung, d.h. das durch diese hervorgerufene Verhalten des Bügelendstücks im Falle einer elastischen Verformung, führt somit dazu, daß die Brillenfassung bzw. die Brille im Falle einer Verlagerung derselben von den Bügelendstücken nach hinten zurückgezogen wird, ohne daß dieser Rückziehbewegung ein nennenswertes Hochschieben der Bügelendstücke überlagert ist.

Die Brille kehrt daher eher in ihre Ausgangslage zurück, so daß der Brillenträger die Brillenlage seltener zu korrigieren braucht. Erreicht ist dies durch die besondere Art der erfindungsgemäßen Abstützung des Anlageabschnitts am übrigen Bügelendstück, wobei der Anlageabschnitt so massiv und steif ausgebildet sein kann, daß er weder zu starken Druckkonzentrationen—wie im Falle eines elastischen Bandes—führt, noch—wie ein Gespinstbügel—hinter dem Ohr mühsam eingefädelt zu werden braucht.

Der Anlageabschnitt des erfindungsgemäßen Bügelendstücks kann so ausgelegt sein, daß er entweder am Kopf oder hinter dem Ohr oder gleichzeitig am Kopf und hinter dem Ohr anliegt. Vorzugsweise liegt er jedoch im wesentlichen von hinten an der Ohrmuschel an, und zwar im Bereich der Mulde bzw. Rille zwischen der Ohrmuschel und dem Schädel, wobei in vorteilhafter Ausbildung vorgesehen sein kann, daß der Anlageabschnitt in Anpassung an die Kopf- und Ohrform dreidimensional gebogen ist, und zwar sowohl bogenförmig derart, daß die Innenseite der Krümmung dem Ohr zugewandt ist, als auch quer zum Schädel. Dadurch, daß der Anlageabschnitt auch von hinten an den Ohrmuschel anliegt, brauchen im Bügel auftretende Zugkärfte nicht über Keilwirkung und Haftkräfte seitlich in den Schädel eingeleitet zu werden, sondern können sie unmittelbar durch das Ohr aufgenommen werden. Bei gegebener Zugkraft im Bügel ermöglicht diese geringstmögliche Anlagedrücke im Kontaktbereich des Anlageabschnitts. Diese bedeutet mit anderen Worten, daß der Anlageabschnitt satt an der Haut am Ohr und/oder am Schädel anliegt und sich praktisch nicht in die Haut eindrückt. Dadurch wiederum ist einem Verrutschen der Brille, das die allmähliche Ausbildung einer Druckrille begleitet, vorgebeugt, so daß aufgrund der erfindugnsgemäßen Ausbildung des Bügelendstücks nicht nur die Brille nach einer Verlagerung eher in ihre Ausgangslage zurückkehrt, sondern auch vor Verrutschen im normalen Gebrauch besser bewahrt ist. Durch die Dimensionen des ersten Abschnitts, des Verbindungsabschnitts und des Anlageabschnitts des Bügelendstücks sowie die Federungseigenschaft aller Elemente des Bügelendstücks können genau die Kraft und die Richtung vorbestimmt werden, die der Anlageabschnitt bei bestimmter Auslenkung am Ohr bzw. Kopf ausübt, so daß eine genaue Anpassung dieser Kraft an die Brille, insbesondere deren Gewicht, und den Brillenträger möglich ist.

Das Bügelendstück ist vorzugsweise aus einem formbeständigen, elastischen Werkstoff gefertigt der dem Bügelendstück eine innere elastische Nachgiebigkeit gibt.

Das erfindungsgemäße Bügelendstück kann sowohl als getrenntes Bauteil gefertigt werden und nach seiner Fertigung mit dem übrigen Bügel verbunden werden als auch zugleich mit dem übrigen Bügel gefertigt sein, wobei dann der übrige Bügel unmittelbar in den ersten Abschnitt des Bügelendstücks übergeht bzw. der erste Abschnitt des Bügelendstücks das hintere Endstück des Bügelschaftes ist.

Weitere Vorteile und Merkmale der Erfindung ergeben sich aus den Unteransprüchen sowie der folgenden.

Beschreibung von Ausführungsbeispielen unter Bezugnahme auf die Zeichnungen. Es zeigen:

Fig. 1 eine Seitenansicht einer ersten Ausführungsform eines Bügelendstücks;

Fig. 2 eine Schnittdarstellung gemäß A—B in Fig. 1;

Fig. 3 eine Schnittdarstellung gemäß C—D in Fig. 1;

Fig. 4 eine Ansicht des Bügelendstücks gemäß den Figuren 1 bis 3 von rechts in Figur 1;

Fig. 5 eine Figur 1 entsprechende Darstellung eines zweiten Ausführungsbeispiels;

Fig. 6 eine Figur 1 entsprechende Darstellung eines dritten Ausführungsbeispiels;

Fig. 7 eine Fig. 1 entsprechende Darstellung eines vierten Ausführungsbeispiels;

Fig. 8 eine ausschnittsweise Darstellung einer Abwandlung des Ausführungsbeispiels gemäß Figur 7;

Fig. 9 eine Figur 1 entsprechende Darstellung eines fünften Ausführungsbeispiels; und

Fig. 10 eine Fig. 1 entsprechende Darstellung eines sechsten Ausführungsbeispiels.

Im folgenden wird zunächst das erste Ausführungsbeispiel unter Bezugnahme auf die Figuren 1 bis 4 erläutert.

Das dargestellte Bügelendstück weist einen geraden, länglichen ersten Abschnitt 2 auf, der entweder einstückig mit einem nicht dargestellten Bügelschaft ausgebildet sein kann oder—wie im dargestellten Fall—mit dem Ende des nicht dargestellten Bügelschaftes verbindbar ist, wozu der erste Abschnitt eine Einstecköffnung 4 aufweist. Der erste Abschnitt 2 hat ein abgerundet rechtwinkliges Profil.

Am hinteren, in Figur 1 linken Ende des ersten Abschnitts 2 ist dieser mit dem oberen Ende eines Verbindungsabschnitts 6 verbunden. Der erste Abschnitt 2 und der Verbindungsabschnitt 6 sind einstückig miteinader ausgebildet; die miteinander verbundenen Enden bilden einen ersten Übergangsbereich 8. Der erste Übergangsbereich 8 ist bogenförmige gekrümmt und führt vom im wesentlichen horizontal verlaufenden ersten Abschnitt 2 allmählich über in den im wesentlichen senkrecht verlaufenden Verbindungsabschnitt 6, der seinerseits bogenförmig gekrümmt ist, wobei die Innenseite der Krümmung nach rechts in Figur 1 gewandt ist. Bei aufgesetzter Brille ist somit diese Krümmungsinnenseite dem Ohr zugewandt.

An seinem unteren Ende ist der Verbindungsabschnitt 6 mit dem unteren Ende eines Anlageabschnitts 10 verbunden. Diese beiden Enden bilden einen zweiten Übergangsbereich 12. Auch der Verbindungsabschnitt 6 und der Anlageabschnitt 10 sind einstückig miteinander ausgebildet. Der Übergangsbereich 12 ist bogenförmig gekrümmt und führt allmählich über vom schwächer gekrümmten Verbindungsabschnitt zum im wesentlichen senkrecht bezüglich des ersten Abschnitts 2 verlaufenden Anlageabschnitt 10.

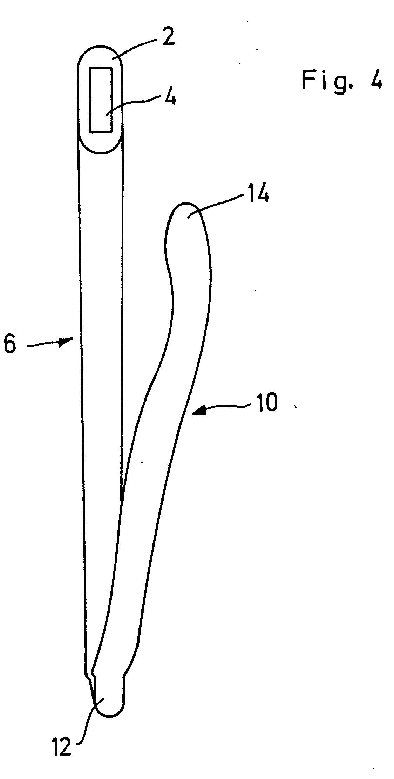

Der Anlageabschnitt 10 ist bogenförmig gekrümmt, wie in Figur 1 erkennbar ist, wobei die Innenseite der Krümmung nach vorne zum Ohr, d.h. nach rechts in Figure 1 gewandt ist. Der Anlageabschnitt 10 ist dazu bestimmt, am Kopf und/oder hinter dem Ohr zur Anlage zu kommen und dadurch das hintere Bügelende abzustützen. Diese Abstützung des hinteren Bügelendes dient dazu, einen Teil der Gewichtskraft der Brille in den Kopf einzuleiten und außerdem die Brille gegen eine Verlagerung nach vorne und ein Herabrutschen auf dem Nasenrücken zu sichern. Vorzugsweise liegt der Anlageabschnitt 10 von hinten an der Ohrmuschel an, und zwar im Bereich der Mulde bzw. Rille zwischen dem Schädel und der Ohrmuschel. Wie Figur 4 erkennen läßt, ist der Anlageabschnitt 10 nicht nur in der Zeichenebene von Figur , sondern zusätzlich senkrecht dazu gekrümmt, wobei durch diese zusätzliche Krümmung der Anlageabschnitt in seinem Verlauf anatomisch der Form der Ohrmuschel und der Mulde am Übergang zwischen der Ohrmuschel und dem Schädel angepaßt ist, um auf diese Weise die Kontaktfläche möglichst groß und dadurch bei gegebener Kraft die auftretenden Drücke möglichst klein zu machen. Wie Figur 4 ferner erkennen läßt, liegen der Anlageabschnitt 10 und der erste Abschnitt 2 sowie der Verbindungsabschnitt 6 durch diese zusätzliche Krümmung nicht in derselben Ebene, so daß insbesondere der erste Abschnitt 2 in gewissem, allerdings geringem Abstand vom (nicht dargestellten) Schädel gehalten wird, der sich bei der Darstellung in Figur 4 rechts vom gezeigten Bügelendstück befinden würde. Abweichend von der Darstellung in Figur 4 können auch der erste Abschnitt 2 und der Verbindungsabschnitt 6 zusätzlich senkrecht zur Zeichenebene von Figur 1 gekrümmt sein, um diese Abschnitte der Schädelform anzupassen, wobei sie auch in Kontakt mit dem Schädel treten können.

Der Anlageabschnitt 10 ist annähernd so lang wie der Verbindungsabschnitt 6. Sein oberes freies Ende 14 endet allerdings in einem gewissen Abstand vom ersten Abschnitt 2 und unterhalb desselben. Die Länge des Anlageabschnitts 10 ist derart gewählt, daß er die vorstehend erläuterte Stützfunktion ausüben kann, daß zu hohen örtlichen Drükken vorgebeugt ist, daß das Bügelendstück auf einfache Weise beim Aufsetzen der Brille hinter das Ohr gebracht werden kann und beim Abnehmen der Brille hinter dem Ohr herausgezogen werden kann und daß der Anlageabschnitt nicht schon durch leichte Erschütterung in senkrechter Richtung verlagert, sondern durch Haftreibung oder Formschluß gehalten wird. Dabei kann sich der Anlageabschnitt weiter nach unten als dargestellt, beispielsweise über den Felsenbeinberg des nicht dargestellten Schädels hinweg, und weiter nach oben als dargestellt erstrecken, beispielsweise bis zum oberen Ohransatz. Unter Berücksichtigung dieser Gesichtspunkte hat der Anlageabschnitt 10 in der Praxis eine Länge L im Bereich von 20 bis 40 mm.

Der Anlageabschnitt hat beim dargestellten Ausführungsbeispiel ein Kreisprofil mit konstanter Querschnittsfläche über die gesamte Länge des Anlageabschnitts 10. Dabei sind die Stärke bzw. Dicke des Anlageabschnitts 10 und die Werkstoffeigenschaften derart aufeinander abgestimmt, daß der Anlageabschnitt 10 ein federndes Element nach Art einer Blattfeder ist. An seinem oberen Ende 14 ist der Anlageabschnitt 10 kreisförmig verdickt, wie Figur 1 erkennen läßt, wobei diese kreisförmige Verdickung abgeflacht ist, wie Figur 4 erkennen läßt.

Der zweite Übergangsbereich 12 ist ebenfalls abgeflacht, wie insbesondere Figur 3 erkennen läßt, wobei die Abflachung des Übergangsbereichs 12 ungefähr in der Zeichenebene von Figur 1, d.h. der durch den Anlageabschnitt 10 und den Verbindungsabschnitt 6 definierten Ebene, liegt. Bei dem dargestellten Ausführungsbeispiel ist der zweite Übergangsbereich verhältnismäßig biegesteif.

Der Verbindungsabschnitt 6 weist nahe seinem unteren Ende einen Federbereich 16 auf.

Ferner weist der Verbindungsabschnitt 6 nahe seinem oberen Ende einen weiteren, oberen Federbereich 18 auf. Das Querschnittsprofil des Verbindungsabschnitts 6 ist kreisförmig oder oval und hat über die gesamte Länge des Verbindungsabschnitts 6 annähernd die gleiche Fläche, wobei sich jedoch der Verbindungsabschnitt 6 von seinem oberen Ende ausgehend zunächst etwas verjüngt. Gleiche Querschnittsfläche wie der Mittelbereich 20 des Verbindungsabschnitts 6 haben auch nicht die Federbereiche 16 und 18. Bei den Federbereichen befindet sich jeweils eine Ausnehmung 22 bzw. 24, durch die die Querschnittsflächen des Verbindungsabschnitts 6 in den Federbereichen 16 und 18 im Vergleich zum Mittelbereich 20 und dem übrigen Bereich des Verbindungsabschnitts 6 verringert ist. Die beiden Federbereiche 16 und 18, in denen der Verbindungsabschnitt 6 somit geschwächt ist, wirken somit nach Art eines Federgelenks, d.h. eines Gelenks, bei dem einer Auslenkung aus der Normalstellung Federkräfte entgegenwirken. Im übrigen sind bei dem Verbindungsabschnitt 6 die Abmessungen und die Werkstoffeigenschaften derart aufeinander abgestimmt, daß der Verbindungsabschnitt ein nach Art einer Blatt- oder Drahtfeder federndes Element ist, wobei diese Blattfeder steifer ist als die durch den Anlageabschnitt 10 gebildete Blattfeder.

Der erste Übergangsbereich 8 ist abgeflacht, wie insbesondere Figur 2 erkennen läßt, wobei die Abflachung im wesentlichen in der durch den ersten Abschnitt 2 und den Verbindungsabschnitt 6 gebildeten Ebene liegt. Der erste Übergangsbereich 8 verbindet den ersten Abschnitt 2 und den Verbindungsabschnitt 6 verhältnismäßig steif.

Wie sich aus der vorstehenden ausführlichen Beschreibung ergibt und in den Figuren erkennbar ist, ist beim ersten Ausführungsbeispiel der Anlageabschnitt 10 lediglich an seinem unteren Ende gehalten und abgestützt. Der gesamte übrige Anlageabschnitt 10, d.h. sowohl dessen obere als auch dessen untere Hälfte bzw. auch schon sein Mittelbereich 26 stehen frei nach oben vor.

Aufgrund der vorstehend beschriebenen Ausführung hat das Bügelendstück Federeigenschaften und ein bestimmtes Auslenkverhalten bei Belastung. Das Bügelendstück ist in den Figuren 1 bis 4 mit ausgezogenen Linien im entspannten Zustand dargestellt. Zugleich kann diese Darstellung als Darstellung des Bügelendstücks einer augesetzten Brille genommen werden, dessen Anlageabschnitt 10 im entspannten Zustand in Figur 1 etwas weiter nach rechts geschwenkt wäre und durch die normale Belastung bei aufgesetzter Brille in die mit ausgezogene Linien in Figur 1 dargestellte Stellung gebracht worden ist. Die letztgenannte Betrachtungsweise wird im folgenden zugrundegelegt. Durch eine Schrauffer ist schematisch in Figur 1 derjenige Kontaktbereich X angedeutet, in dem der Anlageabschnitt 10 in Kontakt mit dem Ohr bzw. Kopf steht, wenn die Brille aufgesetzt ist und keine besonderen Kräfte auf die Brille wirken, sondern lediglich ihre Gewichtskraft. Aufgrund der Federeigenschaften des Anlageabschnitts 10, der Federbereiche 16 und 18 sowie des übrigen Verbindungsabschnitts 6 kann das Bügelendstück beim Aufsetzen der Brille im erforderlichen Maße derart nachgeben, daß der Anlageabschnitt 10 sich den nicht dargestellten Anlageflächen am Kopf bzw. Ohr anpaßt und ohne starke Druckspitzen anliegt. Aufgrund der Abstützung des Anlageabschnitts 10 lediglich an seinem unteren Ende wird bei Einwirkung einer gegebenen Kraft auf den Anlageabschnitt 10 dessen oberes Ende am weitesten ausgelenkt, und zwar ungefährt entlang einem Kreisbogen um den zweiten Übergangsbereich 12. Wenn auch der auf den dem Bügelendstück zugeordneten Bügel entfallende Anteil der Gewichtskraft vom Anlageabschitt 10 eingeleitet werden soll, hat das vorstehend erläuternde Auslenkverhalten des Anlageabschnitts 10 den Vorteil, daß gerade der obere Abschnitt des Anlageabschnitts 10, der diesen Anteil des Gewichts überwiegend abstützen muß, die größte Nachgiebigkeit hat und si h somit unter Einwirkung dieses Anteils der Gewichtskraft leicht in eine Lage bewegen kann, bei der keine störend hohen Drücke im Kontaktbereich auftreten.

Wenn im nicht dargestellten Bügel im wesentlichen in dessen Längsrichtung verlaufende, nach rechts in Figur 1 gerichtete stärkere Kräfte auftreten, wie dies beispielsweise bei heftigeren Kopfbewegungen oder Stößen gegen die Brille der Fall sein kann, verformt sich das Bügelendstück stärker. Für einen solchen Fall ist in Figur 1 die Mittellinie 30 des verformten Bügelendstücks dargestellt, allerdings nur für den Verbindungsabschnitt 6, den zweiten Übergangsbereich 12 und den Anlageabschnitt 10, da sich der erste Abschnitt 2 und der erste Übergangsbereich 8 praktisch nicht verformen.

Eine nach rechts in Figur 1 gerichtete Zugkraft im nicht dargestellten Bügel führt zu einer vom Ohr bzw. Schädel ausgeübten Reaktionskraft auf das Bügelendstück von rechts in Figur 1, die im Kontaktbereich übertragen wird. Aufgrund dieser Beanspruchung wird der Verbindungsabschnitt 6 im durch den oberen Federbereich 18 gebildeten Gelenk etwas im Uhrzeigersinn in Figur 1 geschwenkt. Zugleich wird der Verbindungsabschnitt 6 wegen seiner Blattfedereigenschaft etwas gestreckt. Im am unteren übergangsbereich 12 gebildeten Federgelenk erfolgt eine Schwenkung im Gegenuhrzeigersinn, und der Anlageabschnitt 10 wird aufgrund seiner Blattfedereigenschaft etwas gestreckt und im Gegenuhrzeigersinn um sein unteres Ende geschwenkt. Dadurch ergibt sich für die Mittellinie 30 der in Figure 1 dargestellte Verlauf. Der Anlageabschnitt 10 ist etwas steiler aufgerichtet, d.h. im Gegenuhrzeigersinn verschwenkt, und nach links in Figur 1 verlagert. Für diese ausgelenkte Stellung des Anlageabschnitts 10 ist wiederum der Kontaktbereich Y durch Schraffur schematisch angedeutet, wobei es sich versteht, daß der Anlageabschnitt 10 in ausgelenkter Stellung mit seiner Oberfläche und nicht mit seiner lediglich dargestellten Mittellinie anliegt. Aufgrund der beschriebenen Auslenkbewegung und Verlagerung des Anlageabschnitts 10 liegt der Kontaktbereich Y etwas tiefer als der Kontaktbereich X. Für beide Kontaktbereiche X und Y ist schematisch durch einen Pfeil die resultierende Reaktionskraft vom Ohr bzw. Schädel auf den Anlageabschnitt in Figur 1 eingezeichnet, und zwar als Reaktionskraft FO für die aufgesetzte Brille ohne besondere Belastung und als Reaktionskraft FA für den Fall starker Auslenkung des Anlageabschnitts 10. Aus der vorstehenden Erläuterung ergibt sich und aus Figur 1 ist erkennbar, daß sich die Richtungen der Reaktionskräfte FO und FA dadurch unterscheiden, daß die Reaktionskraft FA "flacher" verläuft als die Reaktionskraft FO, d.h. daß die Richtung der Reaktionskraft FA durch Drehung im Gegenuhrzeigersinn aus der Richtung der Reaktionskraft FO hervorgegangen ist. Der Anteil der senkrecht nach oben gerichteten Kraftkomponente an der Reaktionskraft FA ist dadurch kleiner als der Anteil der senkrecht nach oben gerichteten Kraftkomponente an der Reaktionskraft FO. Die Reaktionskraft FA, die das Bügelendstück und somit die gesamte Brille in ihre Ausgangslage zurückzubringen versucht, hat somit im wesentlichen die ewünschte starke horizontale Kraftkomponente, die die Brille nach hinten, d.h. nach links in Figur 1, zurückzuziehen versucht, und nur eine verhältnismäßig schwache oder gar keine nach oben gerichtete vertikale Kraftkomponente, die das Bügelendstück in unerwünschter Weise anheben würde.

Das vorstehend beschriebene Federungs- und Auslenkverhalten des Bügelendstücks ist im wesentlichen verursacht durch die geometrische Beziehung zwischen dem ersten Abschnitt 2, dem Verbindungsabschnitt 6 und dem Anlageabschnitt 10, d.h. dadurch, daß der Anlageabschnitt einen verhältnismäßig langen frei nach oben vorstehenden Endbereich aufweist. Dadurch ist grundsätzlich vorgegeben, in welcher Weise sich der Anlagebereich unter Belastung verlagert. Unterstützt und gesteuert wird diese Verlagerung durch geeignete Auswahl der Federungseigenschaften der drei Abschnitte des Bügelendstücks und gegebenenfalls die Vorsehung spezieller Federbereiche.

Das beschriebene Bügelendstück bietet verschiedene Möglichkeiten zur individuellen Anpassung an den Brillenträger. Durch Auswahl bzw. Änderung der Länge des ersten Abschnitts 2 kann die Gesamtbügellänge beeinflußt bzw. geändert werden. Der abgeflächte erste übergangsbereich 8 gibt die Möglichkeit, durch plastische Verformung in diesem Bereich beispielsweise unter Wärmeeinwirkung und mit Hilfe eines flachzangenartigen Werkzeugs das Bügelendstück bleibend zu verformen, beispielsweise die Richtung des Verbindungsabschnitts 6 zum ersten Abschnitt 2 und in gewissen Grenzen auch die Länge des Übergangsbereichs 8 zu ändern. Entsprechendes gilt für den zweiten Übergangsbereich 12. Durch Vergrößerung der Tiefe der Ausnehmungen 22 und 24 können die Federbereiche 16 und 18 federweicher gemacht werden. In Abwandlung des dargestellten Ausführungsbeispiels kann auch der Anlageabschnitt 10 mit über seine Länge unterschiedlicher Federsteifigkeit versehen sein. Günstig ist es beispielsweise, wenn dabei die Federsteifigkeit des Anlageabschnitts 10 nahe seinem unteren Ende relativ am größten ist, so daß dort eine gewisse Gelenktwirkung vorhanden ist.

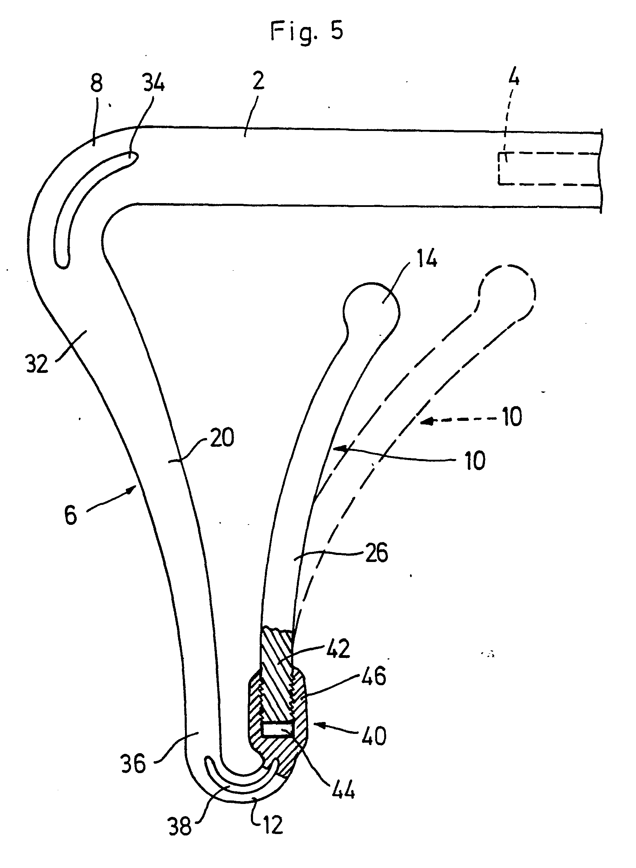

Im folgenden wird das zweite Ausführungsbeispiel unter Bezugnahme auf Figur 5 erläutert, wobei für gleiche bzw. entsprechende Teile wie beim ersten Ausführungsbeispiel gleiche Bezugszeichen verwendet werden und im wesentlichen nur die Unterschiede zum ersten Ausführungsbeispiel erläutert werden.

Beim zweiten Ausführungsbeispiel gemäß Figur 5 ist der Verbindungsabschnitt 6 wiederum bogenförmig gekrümmt, wobei jedoch die Innenseite der Krümmung vom Ohr abgewandt ist. Ferner ändert sich die Querschnittsfläche des Verbindungsabschnitts 6 über seine gesamte Länge, wobei er sich von seinem oberen Ende ausgehend verjüngt. Dadurch ist der Verbindungsabschnitt 6 in seinem oberen Endbereich 32 und auch noch in seinem Mittelbereich verhältnismäßig steif. Die beim zweiten Ausführungsbeispiel vorgesehene Krümmung schafft mehr freien Raum für die Auslenkung des oberen Endes 14 des Anlageabschnitts 10, als er beim ersten Ausführungsbeispiel vorhanden ist.

Der erste Übergangsbereich 8 ist beim zweiten Ausführungsbeispiel nicht abgeflacht, sondern hat im wesentlichen das gleiche Profil wie der erste Abschnitt 2 und der Endbereich 32. Im Übergangsbereich 8 ist ein Schlitz 34 ausgebildet, der ungefähr der Krümmung des Übergangsbereichs 8 folgt und durch den der Übergangsbereich 8 geschwächt ist. Auf diese Weise ist der Übergangsbereich 8 als Federbereich ausgebildet, der ein Federgelenk zwischen dem steiferen ersten Abschnitt 2 und dem steiferen oberen Endbereich 32 des Verbindungsabschnitts 6 dargestellt. Auf ähnliche Weise ist der zweite Übergangsbereich 12 ausgebildet, der ebenfalls nicht abgeflacht ist, sondern ungefähr das Querschnittsprofil des unteren Endbereichs 36 des Verbindungsabschnitts 6 hat, und mit einem Schlitz 38 versehen ist, der der Krümmung des zweiten Übergangsbereichs 12 folgt. Dieser Schlitz schwächt den zweiten Übergangsbereich 12 und macht ihn zum Federbereich, der federweicher als die angrenzenden Enden des Verbindungsabschnitts 6 und des Anlageabschnitts 10 ist und somit ein Federgelenk zwischen diesen beiden Abschnitten bildet. Die als Federbereich ausgebildeten Übergangsbereiche 8 und 12 gemäß Figur 5 erfüllen somit bei der zweiten Ausführungsform die Funktion der Federbereiche 16 und 18 der ersten Ausführungsform, die dementsprechend bei der zweiten Ausführungsform nicht vorgesehen sind. Um die Federeigenschaften der beiden Übergangsbereiche 8 und 12 einstellen bzw. ändern zu können, kann in Abwandlung der zweiten Ausführungsform vorgesehen sein, daß in die Schlitze 38 und/oder 34 ein passender Einsatz eingesetzt ist. Durch ihrerseits unterschiedlich steife Einsätze kann dann die Federsteifigkeit des jeweiligen Übergangsbereichs 8 bzw. 12 gesteuert und festgelegt werden.

Im Gegensatz zur einstückigen Ausbildung von Verbindungsabschnitt 6 und Ablageabschnitt 10 beim ersten Ausführungsbeispiel sind diese beiden Abschnitte beim zweiten Ausführungsbeispiel zunächst als getrennte Bauelemente gefertigt, die mittels einer Verbindungseinrichtung 40 miteinander verbunden sind. Diese Verbindungseinrichtung umfaßt einen Zapfen 42, der am unteren Ende des Anlageabschnitts 10 ausgebildet und auf seiner Aussenseite mit einer Riffelung versehen ist, sow eine Zapfenbohrung 44 in einer Hülse 46, die am zweiten Übergangsbereich 12 angeformt ist bzw. dessen eines Ende bildet. Die Hülse 46 weist im wesentlichen nach oben zum ersten Abschnitt 2. In die glatte Zapfenbohrung 44 ist der Zapfen 42 gesteckt, wobei sich durch Kaltfließen des vorgesehenen Kunststoffwerkstoffs eine feste Rastverbindung ergeben hat. Die zunächst getrennte Fertigung von Verbindungsabschnitt 6 und Ablageabschnitt 10 ermöglicht es, ein ansonsten gegebenes Bügelendstück mit wahlweise verschiedenen Anlageabschnitten 10 je nach den individuellen Bedürfnissen des Brillenträgers zu verbinden. Statt des mit ausgezogenen Linien dargestellten Anlageabschnitts 10 kann beispielsweise auch der gestrichelt in Figur 5 dargestellte Anlageabschnitt 10 zur Anwendung kommen.

Es versteht sich, daß in Abwandlung vom in Figur 5 dargestellten Ausführungsbeispiel die Hülse 46 am Anlageabschnitt 10 angeformt und der Zapfen 42 am Übergangsbereich 12 vorgesehen sein kann und daß ferner die Verbindungseinrichtung 40 statt am in Figur 5 rechten Ende des Übergangsbereichs 12 an dessen linken Ende angeordnet sein kann.

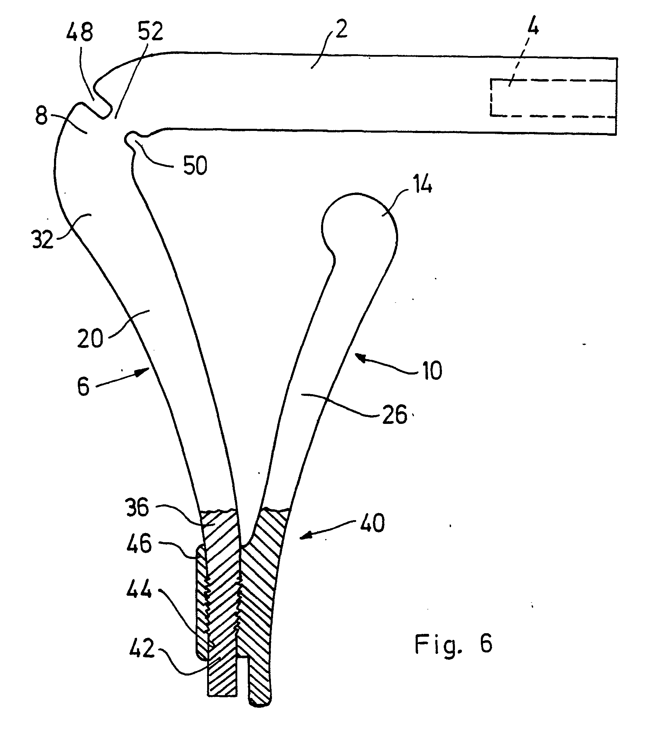

Das dritte Ausführungsbeispiel gemäß Figure 6 ähnelt dem zweiten Ausführungsbeispiel gemäß Figur 5. Auch bei dem dritten Ausführungsbeispiel gemäß Figur 6 ist der erste Übergangsbereich 8 als Federbereich ausgebildet, wobei diese Ausbildung beim Ausführungsbeispiel gemäß Figur 6 jedoch nicht durch einen Schlitz erreicht ist, der der Krümmung des Übergangsbereichs 8 folgt, sondern durch zwei im wesentlichen radiale Einschnitte 48 und 50 ungefähr in der Mitte des Übergangsbereichs 8, die zwischen sich einen senkrecht zur Zeichenebene von Figur 6 verlaufenden Steg 52 stehenlassen. Es ist erkennbar, daß auch bei dieser Ausbildung der Übergangsbereich 8 ein Federbereich ist und ein gefedertes Gelenk bildet.

Wie bei dem zweiten Ausführungsbeispiel sind der Verbindungsabschnitt 6 und der Anlageabschnitt 10 zunächst getrennt gefertigt und mit Hilfe einer Verbindungseinrichtung 40 miteinander verbunden, die eine Hülse 46, eine darin ausgebildete Zapfenbohrung 44 und einen in die glatte Zapfenbohrung gesteckten Zapfen 42 mit Rastvorsprüngen umfaßt. Dabei ist jedoch der Zapfen 42 am unteren Ende des Verbindungsabschnitts 6 ungefähr senkrecht zum ersten Abschnitt 2 verlaufend ausgebildet, während die Hülse 46 einstückig mit dem Anlageabschnitt 10 ausgebildet ist. Die Hülse 46 ist am Anlageabschnitt 10 unterhalb von dessen Längsmitte und auf dessen vom Ohr angewandter Seite angeformt. Die Zapfenbohrung 44 ist als Durchgangsbohrung ausgebildet, so daß der Zapfen 42 nach unten aus der Bohrung vorstehen kann und ein verhältnismäßig großer Spielraum zur Anordnung der Hülse 4 auf dem Zapfen 42 gegeben ist. Dies ermöglicht es, den Abstand zwischen dem ersten Abschnitt 2 und dem Anlageabschnitt 10 in gewünschter Weise einzustellen bzw. den Anlageabschnitt 10 in senkrechter Richtung am Verbindungsabschnitt 6 zu verschieben und dadurch eine individuelle Anpassung an den Brillenträger vorzunehmen.

In Figur 6 ist ferner erkennbar, daß der Anlageabschnitt nahe dem durch die Verbindungseinrichtung 40 gebildeten Übergangsbereich am schlanksten ist und somit dort die geringste Federsteifigkeit hat, so daß die Beweglichkeit des Bügelendstücks gemäß der dritten Ausführungsform im wesentlichen durch die Gelenkigkeit des ersten Übergangsbereichs 8, die federweiche Ausbildung des Anlageabschnitts 10 nahe der Verbindungseinrichtung 40 und die Blattfederausbildung des übrigen Anlageabschnitts 10 gegeben ist. Der frei nach oben vorstehende Endbereich des Anlageabschnitts 10 nimmt auch bei diesem Ausführungsbeispiel deutlich mehr als die Hälfte der Länge des Anlageabschnitts 10 ein, so daß sich unter Last eine ähnliche Verlagerung des Anlageabschnitts 10 wie beim ersten Ausführungsbeispiel ergibt.

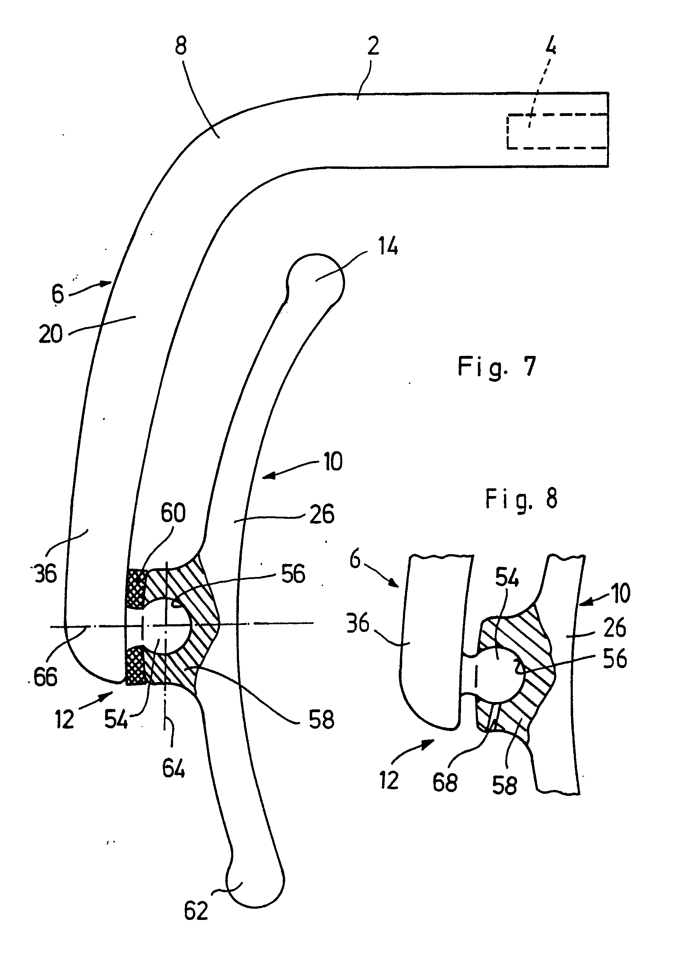

Figur 7 zeigt ein viertes Ausführungsbeispiel, das sich von den zuvor beschriebenen Ausführungsbeispielen im wesentlichen dadurch unterscheidet, daß der Übergangsbereich 12 zwischen dem Anlageabschnitt 10 und dem Verbindungsabschnitt 6 durch ein Kugelgelenk gebildet ist.

Dieses Kugelgelenk umfaßt eine am unteren Ende des Verbindungsabschnitts 6 angeformte Kugel 54 sowie eine dieser angepaßte Kugelpfanne 56, in der die Kugel 54 sitzt und die in einem Ansatz 58 ausgebildet ist, der einstückig am Anlageabschnitt 10 auf dessen vom Ohr abgewandter Seite ausgebildet ist. Das untere Ende des Verbindungsabschnitts 6 und der Ansatz 58 weisen einander zugewandte Flächen auf, die einen gewissen Abstand voneinander haben. In den Zwischenraum zwischen diesen beiden Flächen ist ein Ringelement 60 aus federnd elastischem Material konzentrisch zur Kugel 54 eingesetzt. Dies hat zur Folge daß das Anlageelement 10 auf der Kugel aus seiner Normallage nach allen Seiten gegen den federelastischen Widerstand des Ringelementes 60 geschwenkt werden kann.

Das Anlageelement 10 der vierten Ausführungsform gemäß Figur 7 hat ungefähr die Ausbildung des Anlageelementes 10 gemäß Figur 1, von dem es sich dadurch unterscheidet, daß es auch am unteren Ende eine kreisförmige Verdikkung aufweist und daß es sich von seinem unteren Ende 62 ausgehend allmählich in Richtung zu seinem oberen Ende verjüngt. Der Ansatz 58 mit der Kugelpfanne 56 ist am Mittelbereich 26 angeordnet, und zwar etwas unter der Längsmitte des Anlageabschnitts 10.

Es versteht sich, daß der Übergangsbereich 12 mit der Kugel 54 und der Kugelpfanne 56 am Anlageabschnitt auch weiter unten als dargestellt angeordnet sein kann. Für das Ausführungsbeispiel gemäß Figur 7 ist es jedoch zweckmäßig, den Übergangsbereich am Mittelbereich des Anlageabschnitts nahe der Längsmitte des Anlageabschnitts 10 anzuordnen, weil andernfalls die vom elastischen Ringelement 60 aufzunehmenden Momente größer würden, was wiederum ein steiferes Ringelement erfordern würde, das dann für Schwenkbewegungen des Anlageabschnitts 10 um die in der Zeichenebene von Figur 7 liegende, senkrecht von oben nach unten verlaufende Achse 64 möglicherweise zu steif wäre.

Das Kugelgelenk aus der Kugel 54 und der Kugelpfanne 56 ermöglicht außer allseitigen Schwenkbewegungen auch Drehungen des Anlageabschnitts 10 um durch die Kugelmitte verlaufende Achsen.

Der erste Abschnitt 2, der Übergangsbereich 8 und der Verbindungsabschnitt des vierten Ausführungsbeispiels gemäß Figur 7 haben grundsätzlich eine ähnliche Ausbildung wie die entsprechenden Teile beim ersten Ausführungsbeispiel gemäß Figur 1, wobei die Unterschiede lediglich darin bestehen, daß beim vierten Ausführungsbeispiel der Verbindungsabschnitt 6 insgesamt dicker ist und keinen speziellen Federbereich wie den Federbereich 18 aufweist und daß der Übergangsbereich 8 nicht abgeflacht ist. Im übrigen könnte in Abwandlung des Ausführungsbeispiels gemäß Figur 7 auch vorgesehen sein, daß dessen erster Abschnitt, Übergangsbereich und Verbindungsabschnitt die Ausbildung gemäß Figur 1 oder gemäß Figur 5 oder gemäß Figur 6 haben.

Federnde Nachgiebigkeit haben bei dem Ausführungsbeispiel gemäß Figur 7 insbesondere der Anlageabschnitt 10 aufgrund seiner Blattfedereigenschaft und der Verbindungsabschnitt 6 ebenfalls aufgrund seiner Blattfedereigenschaft. Eine Federwirkung in Richtung der Achse 66 übt das Ringelement 60 nicht aus; Schwenkbewegungen des Anlageabschnitts 10 auf der Kugel 54 dagegen setzt das Ringelement 60 einen elastischen Widerstand entgegen.

Aufgrund der beschriebenen Ausbildung kann der Anlageabschnitt 10 beim Aufsetzen der Brille durch Drehen und Schwenken auf der Kugel 54 eine geeignete Position einnehmen und sich darüber hinaus durch eigene elastische Verformung zusätzlich der Form des Ohres und/oder des Kopfes anpassen. Außerdem wird diese Anpassung durch die Federeigenschaften des Verbindungsabschnitts 6 und gegebenenfalls sogar des Übergangsbereichs 8 unterstützt. Im Falle einer stärkeren, in Längsrichtung des ersten Abschnitts 2 nach vorne, das heißt nach rechts in Figur 7 gerichteten Kraft würde der am Kopf bzw.

Ohr anliegende Anlageabschnitt 10 relativ zum ersten Abschnitt 2 nach links in Figur 7 ausweichen. Diese wird dem Anlageabschnitt durch die Federeigenschaft des Verbindungsabschnitts 6 ermöglicht, wobei der Anlageabschnitt 10 zugleich als Ganzes um die Kugel 54 im Gegenuhrzeigersinn schwenkt. Dem ist noch überlagert eine elastische Verformung zumindest der oberen Hälfte des Anlageabschnitts 10, wobei durch diese Verformung die obere Hälfte etwas gestreckt und im Sinne einer Schwenkung um den zweiten Übergangsbereich 12 verlagert wird. Die gegen Federkräfte erfolgende Ausweichbewegung des Anlageabschnitts 10 führt somit im wesentlichen zu einer Verlagerung des gesamten Anlageabschnitts 10 nach links (in Figur 7), wobei dieser Verlagerung eine geringe Schwenkung des Anlageabschnitts 10 im Gegenuhrzeigersinn überlagert ist. Dadurch ist wie bei dem ersten Ausführungsbeispiel gemäß Figur 1 für eine am Anlageabschnitt 10 wirkende Reaktionskraft gesorgt, bei der der Anteil der vertikal nach oben gerichteten Kraftkomponente nicht vergrößert ist und die den ersten Abschnitt 2 und somit den Bügel im wesentlichen horizontal in seine Ausgangslage zurückzubringen versucht.

Die in Figur 8 gezeigte Abwandlung des Ausführungsbeispiels gemäß Figur 7 unterscheidet sich vom Ausführungsbeispiel gemäß Figur 7 dadurch, daß bei der Abwandlung das Ringelement 60 weggelassen ist, daß das Kugelgelenk aus der Kugel 54 und der Kugelpfanne 56 mit Hilfe eines Klebstoffs versteift ist und daß im Ansatz 58 ein Klebstoffkanal 68 ausgebildet ist. Im übrigen stimmt das Bügelendstück gemäß Figur 8 mit dem Bügelendstück gemäß Figur 7 überein. Das Bügelendstück gemäß Figur 8 wird zunächst dem Brillenträger individuell dadurch angepaßt, daß der Anlageabschnitt 10 durch Schwenken bzw. Drehen auf der Kugel 54 in beliebiger Richtung in eine geeignete Position gebracht wird, in der der Anlageabschnitt der Form des Ohres und bzw. Kopfes des Brillenträgers optimal angepaßt ist. In dieser Lage wird dann der Anlageabschnitt am Verbindungsabschnitt 6 dadurch fixiert, daß durch den Klebstoffkanal 68 Klebstoff in den Zwischenraum zwischen der Kugel 54 und der Kugelpfanne 56 gegeben wird. Für den späteren Gebrauch ist dadurch die Gelenkigkeit im Kugelgelenk aufgehoben. Die federnde Nachgiebigkeit der übrigen Elemente, insbesondere des Anlageabschnitts 10 selber und des Verbindungsabschnitts 6 bleibt jedoch erhalten und kann durch zusätzliche Federbereiche nahe dem unteren und/oder oberen Ende des Verbindungsabschnitts 6, wie sie bei dem Ausführungsbeispiel gemäß Figur 1 vorgesehen sind, oder durch einen zusätzlichen Federbereich im Anlageabschnitt 10 nahe dem unteren Übergangsbereich 12 erhöht sein.

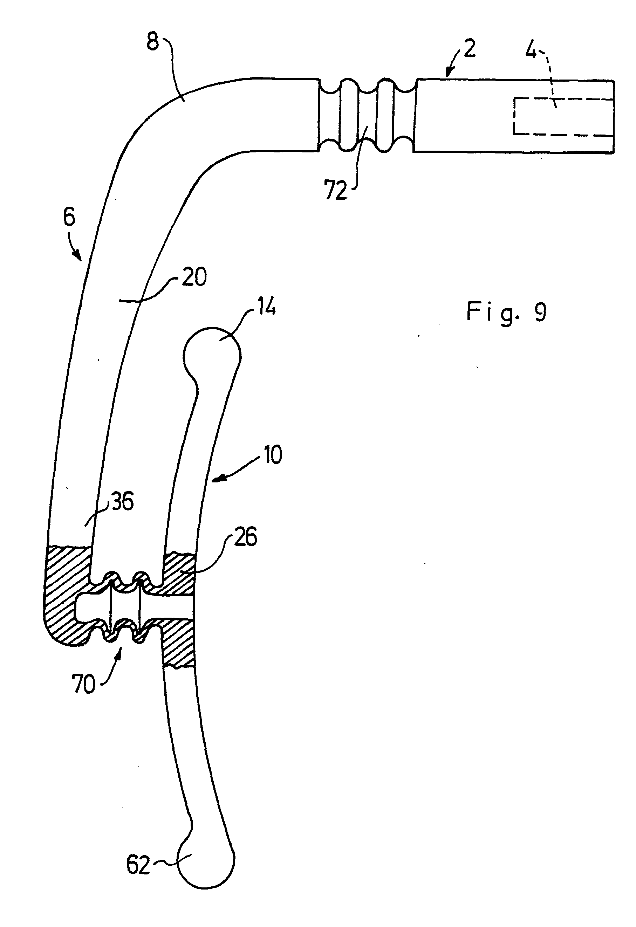

Das fünfte Ausführungsbeispiel gemäß Figur 9 ähnelt dem vierten Ausführungsbeispiel gemäß Figur 7 und unterscheidet sich von diesem im wesentlichen dadurch, daß das mittels des Ringelementes 60 abgefederte Kugelgelenk durch ein zylindrisches Federelement ersetzt ist.

Das zylindrische Federelement ist beim Ausführungsbeispiel gemäß Figur 9 als Wellrohrfeder 70 ausgebildet, die einstückig sowohl mit dem Verbindungsabschnitt 6 als auch mit dem Anlageabschnitt 10 ausgebildet ist. Eine solche einstückige Ausbildung ist durch Wahl eines geeigneten Kunststoffwerkstoffs möglich. Die Achse der innen hohlen Wellrohrfeder 70 verläuft im wesentlichen parallel zur Achse des ersten Abschnitts 2 und somit des nicht dargestellten Bügels. Die Wellrohrfeder 70 ist an ihrem linken Ende mit dem unteren Ende des Verbindungsabschnitts verbunden und an ihrem in Figur 9 rechten Ende mit dem Anlageabschnitt verbunden, und zwar an dessen Längsmitte. Die Wellrohrfeder 70 ermöglicht sowohl eine axiale Zusammendrückung als auch eine Krümmung ihrer selbst.

Der Anlageabschitt 10 der fünften Ausführungsform gemäß Figur 9 stimmt im wesentlichen mit dem Anlageabschnitt der ersten Ausführungsform gemäß Figur 1 überein, wobei die Unterschiede bestehen, daß beim fünften Ausführungsbeispiel auch am unteren Ende 62 ein kreisförmig verdicktes Ende vorgesehen ist, und daß der Anlageabschnitt an seiner Längsmitte und nicht an seinem unteren Ende abgestützt und gehalten ist. Der Verbindungsabschnitt 6 der fünften Ausführungsform ähnelt dem der vierten Ausführungsform gemäß Figur 7, wobei im Vergleich dazu der Unterschied besteht, daß sich der Verbindungsabschnitt 6 der fünften Ausführungsform von seinem oberen Ende ausgehend allmählich nach unten verjüngt. Der erste Abschnitt 2 des fünften Ausführungsbeispiels ähnelt dem ersten Abschnitt des vierten Ausführungsbeispiels und weist demgegenüber den Unterschied auf, daß er einen Bereich 72 mit aufeinanderfolgenden umlaufenden Nuten und vorstehende, umlaufenden Wülsten aufweist, der es auf besonders einfache und wenig sichtbare Art ermöglicht, die Länge des ersten Abschnitts 2 zu ändern, indem der Bereich 72 unter Wärmezufuhr und gegebenenfalls unter Verwendung eines geeigneten Werkzeugs gelängt oder gestaucht wird. Der erste Übergangsbereich 8 stimmt mit dem Übergangsbereich 8 der vierten Ausführungsform überein.

Aufgrund der Wellrohrfeder 70 dann der Anlageabschnitt 10 insgesamt sowohl in Richtung der Achse der Wellrohrfeder 70 verschoben als auch durch Biegen der Wellrohrfeder 70 beliebig seitlich geschwenkt und schließlich in begrenztem Ausmaße auch um die Achse der Wellrohrfeder 70 gedreht werden. Dies ermöglicht es, daß sich der Anlageabschnitt 10 in die geeignetste Lage hinter dem Ohr des Brillenträgers einstellt, wobei der Anlageabschnitt 10 von der Wellrohrfeder 70 und aufgrund seiner eigenen blattfederartigen Ausbildung in elastischer Anlage am Ohr gehalten wird. Eine stärkere Belastung nimmt das Bügelendstück gemäß Figur 9 im wesentlichen durch axiale Zusammendrückung der Wellrohrfeder 70 auf, wobei dem eine gewisse Verformung des blattfederartigen Verbindungsabschnitts 6 und des Anlageabschnitts 10 überlagert sind. Im wesentlichen wird jedoch dabei der Anlageabschnitt 10 parallel zum ersten Abschnitt 2 nach links in Figur 9 verlagert, wobei sich die Richtung der Reaktionskraft auf den Anlageabschnitt 10 im wesentlichen nicht ändert. Das Ausführungsbeispiel gemäß Figur 9 eignet sich insbesondere für solche Anlageabschnitte 10, die symmetrisch zu ihrer Längsmitte ausgebildet sind, im wesentlichen senkrecht verlaufen und von hinten am Ohr anliegen. Dabei verläugt dann die auf den Anlageabschnitt 10 ausgeübte Reaktionskraft auch im stärker ausgelenkten Zustand im wesentlichen waagerecht, d.h. ohne nennenswerte nach oben gerichtete Kraftkomponente. Würde bei dem Ausführungsbeispiel gemäß Figur 9 der Anlageabschnitt überwiegend mit seiner oberen Hälfte anliegen, würde er durch stärkere Belastung im Gegenuhrzeigersinn, um die Wellrohrfeder 70 geschwenkt werden, wobei sich eine günstigere Richtung der Reaktionskraft auf den Anlageabschnitt 10 ergeben würde, wie dies ausführlich für Figur 1 erläutert ist.

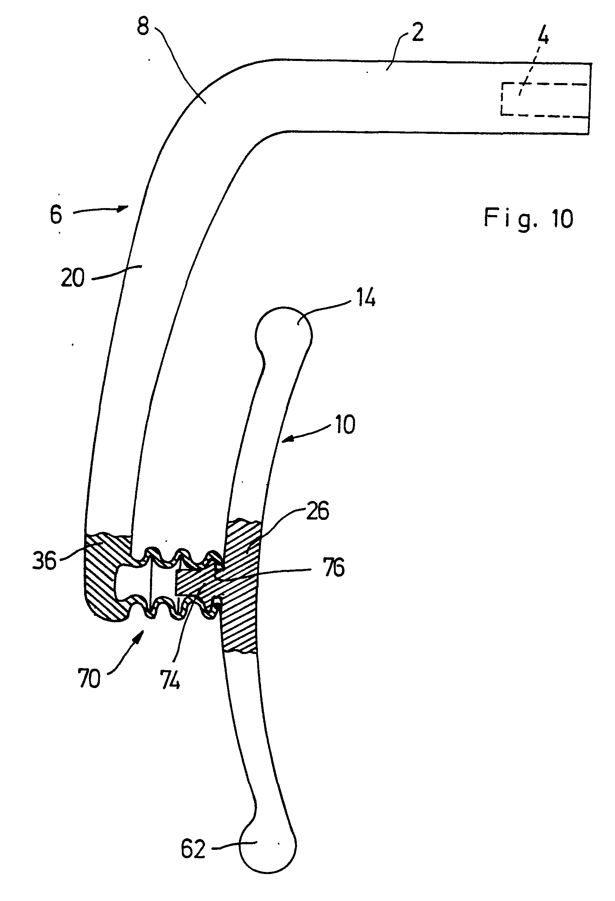

Figur 10 zeigt ein sechstes Ausführungsbeispiel, das weitgehend mit dem fünften Ausführungsbeispiel übereinstimmt. Abgesehen davon, daß beim sechsten Ausführungsbeispiel der besonders gestaltete Bereich 72 nicht vorgesehen ist, besteht der Unterschied zur Ausführungsform gemäß Figur 9 darin, daß die Wellrohrfeder 70 nicht auch mit dem Anlageabschnitt 10 sondern nur mit dem Verbindungsabschnitt 6 einstückig ausgebildet ist. Am Anlageabschnitt 10, der im übrigen gleiche Ausbildung wie der Anlageabschnitt gemäß Figur 9 hat, ist in dessen Längsmitte ein Zapfen 74 angeformt, der einen umlaufenden Flansch 76 trägt. Das in Figur 10 rechte Ende der Wellrohrfeder 70 ist so auf den Zapfen 74 geschoben, daß die Wellrohrfeder den Flansch 76 umgreift und dadurch hinreichend fest mit dem Anlageabschnitt 10 verbunden ist. Die vorstehend beschriebene Ausbildung ermöglicht es, sowohl die Wellrohrfeder 70 als auch den Zapfen 74 zunächst mit Überlänge herzustellen und dann auf das gewünste Maß zu kürzen, bevor die Wellrohrfeder mit dem Anlageabschnitt 10 verbunden wird. Durch die Festlegung der Länge der Wellrohrfeder 70 kann die Lage des Anlageabschnitts 10 relativ zum ersten Abschnitt 2 in dessen Längsrichtung eingestellt bzw. festgelegt werden. Die Länge des Zapfens 74 wiederum bestimmt, über welche Länge die Wellrohrfeder 70 versteift ist, d.h. wie biegesteif und wie axialsteif die Wellrohrfeder 70 ist.

Im übrigen stimmt das Verhalten des Bügelendstücks gemäß Figur 10 mit dem Verhalten des Bügelendstücks gemäß Figur 9 überein.

Die Tatsache, daß bei dem Ausführungsbeispiel gemäß Figur 10 der Anlageabschnitt 10 und der Verbindungsabschnitt 6 zunächst getrennt gefertigt werden, ermöglicht es auf ähnliche Weise wie bei den Ausführungsbeispielen gemäß den Figuren 5 und 6, eine Einheit aus erstem Abschnitt 2 und Verbindungsabschnitt 6 mit verschiedenen und dem jeweiligen Einzelfall angepaßten Anlageabschnitten 10 zusammenzufügen. Gleiches gilt im übrigen für die Ausführungsformen gemäß den Figuren 7 und 8.

**Patentansprüche**

1. Bügelenstück für einen Bügel einer Brillenfassung, mit einem im wesentlichen geraden, horizontal in Bügellängsrichtung verlaufenden, ersten Abschnitt (2), einem von einem Ende des ersten Abschnitts aus im wesentlichen nach unten verlaufenden Verbindungsabschnitt (6) und einem länglichen Anlageabschnitt (10), der zur Anlage zwischen Kopf und Ohr bestimmte ist und am Verbindungsabschnitt angebracht ist, dadurch gekennzeichnet, daß der Anlageabschnitt (10) über mindestens die Hälfte seiner Gesamtlänge (L) in Richtung zum ersten Abschnitt (2) frei vorsteht und mit dem Verbindungsabschnitt (6) an dessen unterem Ende mittels eines Übergangsbereichs (12) verbunden ist, daß der Übergangsbereich (12) oder der in diesen übergehende Bereich des Verbindungsabschnitts (6) oder des Anlageabschnitts (10) derart als zusätzlicher Federbereich (16) oder als Federelement (54, 56, 60; 70) ausgebildet ist, daß der Anlageabschnitt (10) in dem durch den Federbereich oder das Federelement gebildeten Federgelenk schwenkbar ist, und daß der Verbindungsabschnitt (6) relativ steifer als der Anlageabschnitt (10) ist.

2. Bügelendstück nach Anspruch 1, dadurch gekennzeichnet, daß der Anlageabschnitt (10) bogenförmig gekrümmt ausgebildet ist, wobei die Innenseite der Krümmung nach vorne zum Ohr gewandt ist.

3. Bügelendstück nach Anspruch 2, dadurch gekennzeichnet, daß der Anlageabschnitt (10) zusätzlich quer zur bogenförmigen Krümmung gekrümmt ist.

4. Bügelendstück nach einem der Ansprüche 1 bis 3, dadurch gekennzeichnet, daß der Anlageabschnitt (10) ein nach Art einer Blattfeder federndes Element ist.

5. Bügelendstück nach Anspruch 4, dadurch gekennzeichnet, daß der Anlageabschnitt (10) über seine Länge unterschiedliche Federsteifigkeiten aufweist.

6. Bügelendstück nach einem der Ansprüche 1 bis 5, dadurch gekennzeichnet, daß zumindest ein freies Ende (14, 62) des Anlageabschnitts (10) verdickt ist.

7. Bügelendstück nach einem der Ansprüche 1 bis 6, dadurch gekennzeichnet, daß der längliche Anlageabschnitt (10) ein kreisförmiges oder ovales Profil hat.

8. Bügelendstück nach einem der Ansprüche 1 bis 7, dadurch gekennzeichnet, daß der Verbindungsabschnitt (6) bogenförmig gekrümmt ausgebildet ist.

9. Bügelendstück nach Anspruch 8, dadurch gekennzeichnet, daß die Innenseite der Krümmung nach vorne zum Ohr gewandt ist.

10. Bügelendstück nach Anspruch 8, dadurch gekennzeichnet, daß die Innenseite der Krümmung vom Ohr weg nach hinten gewandt ist.

11. Bügelendstück nach einem der Ansprüche 1 bis 10, dadurch gekennzeichnet, daß sich der Verbindungsabschnitt (6) von seinem oberen, mit dem ersten Abschnitt (2) verbundenen Ende ausgehend allmählich verjüngt.

12. Bügelendstück nach einem der Ansprüche 1 bis 11, dadurch gekennzeichnet, daß der Verbindungsabschnitt (6) ein nach Art einer Blattfeder federndes Element ist.

13. Bügelenstück nach Anspruch 1 bis 12, dadurch gekennzeichnet, daß der Federbereich (16) ein Bereich mit verringerter Querschnittsfläche ist.

14. Bügelendstück nach einem der Ansprüche 1 bis 13, dadurch gekennzeichnet, daß der Verbindungsabschnitt (6) nahe seinem oberen, mit dem ersten Abschnitt (2) verbundenen Ende einen Federbereich (18) aufweist, der relativ zum Mittelbereich (20) des Verbindugnsabschnitts federweicher ist.

15. Bügelendstück nach Anspruch 14, dadurch gekennzeichnet, daß der Federbereich (18) nahe dem oberen Ende ein Bereich mit verringerter Querschnittsfläche ist.

16. Bügelendstück nach einem der Ansprüche 1 bis 15, dadurch gekennzeichnet, daß der erste Abschnitt (2) und der Verbindungsabschnitt (6) einstückig miteinander ausgebildet sind.

17. Bügelendstück nach Anspruch 16, dadurch gekennzeichnet, daß der den ersten Abschnitt (2) mit dem Verbindungsabschnitt (6) an den Enden dieser Abschnitte verbindende Übergangsbereich (8) einen bogenförmigen Verlauf hat.

18. Bügelendstück nach Anspruch 17, dadurch gekennzeichnet, daß der Übergangsbereich (8) zwischen dem ersten Abschnitt (2) und dem Verbindungsabschnitt (6) derart abgeflacht ist, daß die Abflachung im wesentlichen in der durch den ersten Abschnitt (2) und den Verbindungsabschnitt (6) bestimmten Ebene liegt.

19. Bügelendstück nach Anspruch 17 oder 18, dadurch gekennzeichnet, daß der Übergangsbereich (8) zwischen dem ersten Abschnitt (2) und dem Verbindungsabschnitt (6) mit einem der Krümmung des Übergangsbereichs folgenden Schlitz (34) versehen ist.

20. Bügelendstück nach Anspruch 19, dadurch gekennzeichnet, daß in den Schlitz (34) ein Einsatz aus elastischem Material eingesetzt ist.

21. Bügelendstück nach einem der Ansprüche 16 bis 20, dadurch gekennzeichnet, daß der Übergangsbereich (8) zwischen dem ersten Abschnitt (2) und dem Verbindungabschnitt (6) als Federbereich ausgebildet ist.

22. Bügelendstück nach einem der Ansprüche 1 bis 21, dadurch gekennzeichnet, daß der Verbindungsabschnitt (6) und der Anlageabschnitt (10) einstückig miteinander ausgebildet sind.

23. Bügelendstück nach Anspruch 22, dadurch gekennzeichnet, daß der den Verbindungsabschnitt (6) mit dem Anlageabschnitt (10) an den Enden dieser Abschnitte verbindende Übergangsbereich (12) einen bogenförmigen Verlauf hat.

24. Bügelendstück nach Anspruch 23, dadurch gekennzeichnet, daß der Übergangsbereich (12) zwischen dem Anlageabschnitt (10) und dem Verbindungsabschnitt (6) derart abgeflacht ist, daß die Abflachung im wesentlichen in der durch den Anlageabschnitt (10) und den Verbindungsabschnitt (6) bestimmten Ebene liegt.

25. Bügelendstück nach einem der Ansprüche 23 oder 24, dadurch gekennzeichnet, daß der Übergangsbereich (12) zwischen dem Anlageabschnitt (10) und dem Verbindungsabschnitt (6) mit einem der Krümmung folgenden Schlitz (38) versehen ist.

26. Bügelendstück nach Anspruch 25, dadurch gekennzeichnet, daß in den Schlitz (38) ein Einsatz aus elastischem Material eingesetzt ist.

27. Bügelendstück nach einem der Ansprüche 1 bis 21, dadurch gekennzeichnet, daß der Verbindungsabschnitt (6) und der Anlageabschnitt (10) getrennt gefertigte Teile sind.

28. Bügelendstück nach Anspruch 27, dadurch gekennzeichnet, daß der Verbindungsabschnitt (6) und der Anlageabschnitt (10) mit Hilfe eines Zapfens (42) und einer Zapfenbohrung (44) verbunden sind, in die der Zapfen eingesetzt ist, wobei der Zapfen an einem der beiden Teile (Verbindungsabschnitt oder Anlageabschnitt) und die Zapfenbohrung am anderen der beiden Teile ausgebildet ist.

29. Bügelendstück nach Anspruch 27, dadurch gekennzeichnet, daß die Zapfenbohrung (44) eine Durchgangsbohrung am Anlageabschnitt (10) ist und daß der Zapfen (42) durch den unteren Endbereich (36) des Verbindungsabschnitts (6) gebildet ist.

30. Bügelendstück nach Anspruch 27, dadurch gekennzeichnet, daß der Verbindungsabschnitt (6) und der Anlageabschnitt (10) mit Hilfe eines Kugelgelenks (54, 56) miteinander verbunden sind.

31. Bügelendstück nach Anspruch 30, dadurch gekennzeichnet, daß zwischen die beiden Teile (Verbindungsabschnitt (6) und Anlageabschnitt (10)) ein elastisches Ringelement (60) im wesentlichen konzentrisch zum Kugelgelenk (54, 56) eingesetzt ist.

32. Bügelendstück nach Anspruch 22 oder 27, dadurch gekennzeichnet, daß der Verbindungsabschnitt (6) und der Anlageabschnitt (10) mit Hilfe eines zylindrischen Federelements (70) miteinander verbunden sind.

33. Bügelendstück nach Anspruch 31, dadurch gekennzeichnet, daß die Längsachse des Federelements (70) im wesentlichen in Richtung des ersten Abschnitts (2) verläuft.

34. Bügelendstück nach Anspruch 32 oder 33, dadurch gekennzeichnet, daß das Federelement eine Wellrohrfeder (70) ist.

35. Bügelendstück nach einem der Ansprüche 30 bis 34, dadurch gekennzeichnet, daß der Anlageabschnitt (10) in seinem Mittelbereich (26) mit dem Verbindungsabschnitt (6) verbunden ist.

**Revendications**

1. Pièce d'extrémité de branche de monture de lunette, avec une première section (2) sensiblement droite, s'étendant horizontalement dans la longueur de la branche, avec une section de liaison (6) s'étendant depuis une extrémité de la première section, sensiblement vers le bas, et une section d'appui (10) allongée, qui est conçue pour l'appui entre tête et oreille et montée sur la section de liaison, caractérisée en ce qu'au moins la moitié de la longueur totale (L) de la section d'appui (10) fait saillie librement en direction de la première section (2) et est reliée à la section de liaison (6) à son extrémité inférieure, à l'aide d'une zone de transition (12), que la zone de transition (12) ou la zone de la section de liaison (6), ou de la section d'appui, qui se transforme en cette zone de transition est réalisée sous forme de zone élastique (16) ou d'élément élastique (54, 56, 60; 70) supplémentaire, de façon que la section d'appui (10) soit pivotante dans l'articulation élastique formée par la zone élastique ou par l'élément élastique, et que la section de liaison (6) soit relativement plus raide que la section d'appui (10).

2. Pièce d'extrémité de branche selon la revendication 1, caractérisée en ce que la section d'appui (10) est courbée en forme d'arc, la face intérieure de la courbure étant tournée vers l'avant en direction de l'oreille.

3. Pièce d'extrémité de branche selon la revendication 2, caractérisée en ce que la section d'appui (10) es le lieu d'une courbure supplémentaire orientée transversalement par rapport à la courbure en forme d'arc.

4. Pièce d'extrémité de branche selon l'une des revendications 1 à 3, caractérisée en ce que la section d'appui (10) est un élément élastique à la façon d'un ressort à lame.

5. Pièce d'extrémité de branche selon la revendication 4, caractérisée en ce que la section d'appui (10) présente sur sa longueur des rigidités élastiques différentes.

6. Pièce d'extrémité de branche selon l'une des revendications 1 à 5, caractérisée en ce qu'au moins une extrémité libre (14, 62) de la section d'appui (10) est plus épaisse.

7. Pièce d'extrémité de branche selon l'une des revendications 1 à 6, caractérisée en ce que la section d'appui allongée (10) présente un profil de forme circulaire ou ovale.

8. Pièce d'extrémité de branche selon l'une des revendications 1 à 7, caractérisée en ce que la section de liaison (6) est réalisée courbée en forme d'arc.

9. Pièce d'extrémité de branche selon la revendication 8, caractérisée en ce que la face intérieure de la courbure est tournée vers l'avant, en direction de l'oreille.

10. Pièce d'extrémité de branche selon la revendication 8, caractérisé en ce que la face intérieure de la courbure est orientée vers l'arrière, en s'éloignant de l'oreille.

11. Pièce d'extrémité de branche selon l'une des revendications 1 à 10, caractérisée en ce que la section de liaison (6) rétrécit progressivement, en partant de son extrémité supérieure reliée à la première section (2).

12. Pièce d'extrémité de branche selon l'une des revendications 1 à 11, caractérisée en ce que la section de liaison (6) est un élément élastique, à la façon d'un ressort à lame.

13. Pièce d'extrémité de branche selon l'une des revendications 1 à 12, caractérisée en ce que la zone élastique (16) est une zone de plus faible surface de section transversale.

14. Pièce d'extrémité de branche selon l'une des revendications 1 à 13, caractérisée en ce que la section de liaison (6) présente, à proximité de son extrémité supérieure, reliée à la première section (2), une zone èlastique (18) qui est élastiquement plus molle que la zone centrale (20) de la section de liaison.

15. Pièce d'extrémité de branche selon la revendication 14, caractérisée en ce qu'à proximité de l'extrémité supérieure, la zone élastique (18) est une zone dont la surface de la section transversale est réduite.

16. Pièce d'extrémité de branche selon l'une des revendications 1 à 15, caractérisée en ce que la première section (2) et la section de liaison (6) sont réalisées reliées d'une seule pièce.

17. Pièce d'extrémité de branche selon la revendication 16, caractérisée en ce que la zone de transition (8) qui relie la première section (2) à la section de liaison (6) aux extrémités de ces sections présente une allure en forme d'arc.

18. Pièce d'extrémité de branche selon la revendication 17, caractérisée en ce qu'entre la première section (2) et la section de liaison (6), la zone de transition (8) est aplatie de telle façon que l'aplatissement est situé sensiblement dans le plan déterminé par la première section (2) et la section de liaison (6).

19. Pièce d'extrémité de branche selon la revendication 17 ou 18, caractérisée en ce que la section de transition (8) entre la première section (2) et la section de liaison (6) est pourvue d'une fente (34) qui suit la courbure de la zone de transition.

20. Pièce d'extrémité de branche selon la revendication 19, caractérisée en ce qu'un insert en matériau élastique est inséré dans la fente (34).

21. Pièce d'extrémité de branche selon l'une des revendications 16 à 20, caractérisée en ce qu'entre la première section (6) et la section d'appui (10), la zone de transition (8) est réalisée sous forme de zone élastique.

22. Pièce d'extrémité de branche selon l'une des revendications 1 à 21, caractérisée en ce que la section de liaison (6) et la section d'appui (10) sont réalisées formant ensemble une seule pièce.

23. Pièce d'extrémité de branche selon la revendication 22, caractérisé en ce que la zone de transition (12) reliant la section de liaison (6) et la section d'appui (10), aux extrémités de ces sections, présente une allure en forme d'arc.

24. Pièce d'extrémité de branche selon la revendication 23, caractérisée en ce que la zone de transition (12) entre la section d'appui (10) et la section de liaison (6), est applatie de façon que l'aplatissement soit situé sensiblement dans un plan déterminé par la section d'appui (10) et la section de liaison (6).

25. Pièce d'extrémité de branche selon l'une des revendications 23 ou 24, caractérisée en ce que la zone de transition (12) entre la section d'appui (10) et la section de liaison (6) est pourvue d'une fente (38) qui suit la courbure.

26. Pièce d'extrémité de branche selon la revendication 25, caractérisée en ce qu'un insert en matériau élastique est inséré dans la fente (38).

27. Pièce d'extrémité de branche selon l'une des revendications 1 à 21, caractérisée en ce que la section de liaison (6) et la section d'appui (10) sont des pièces fabriquées séparément.

28. Pièce d'extrémité de branche selon la revendication 27, caractérisée en ce que la section de liaison (6) et la section d'appui (10) sont reliées à l'aide d'un tourillon (42) et d'un alésage de tourillon (44) dans lequel est inséré le tourillon, le tourillon étant réalisé sur l'une des deux parties (section de liaison et section d'appui) et l'alésage de tourillon étant réalisé sur l'autre des deux parties.

29. Pièce d'extrémité de branche selon la revendication 27, caractérisée en ce que l'alésage de tourillon (44) est un alésage traversant situé sur la section d'appui (10) et que le tourillon (42) est formé par la zone d'extrémité inférieure (36) de la section de liaison (6).

30. Pièce d'extrémité de branche selon la revendication 27, caractérisée en ce que la section de liaison (44) est un alésage traversant situé sur la section d'appui (10) et que le tourillon (42) est formé par la zone d'extrémité intérieure (36) de la section de liaison (6).

31. Pièce d'extrémité de branche selon la revendication 30, caractérisée en ce qu'un élément annulaire élastique (60) est inséré entre les deux parties (section de liaison (6) et section d'appui (10)), de façon sensiblement concentrique par rapport à l'articulation sphérique (54, 56).

32. Pièce d'extrémité de branche selon la revendication 22 ou 27, caractérisée en ce que la section de liaison (6) et la section d'appui (10) sont reliées entre elles à l'aide d'un élément élastique cylindrique (70).

33. Pièce d'extrémité de branche selon la revendication 31, caractérisée en ce que l'axe longitudinal de l'élément élastique (70) s'étend sensiblement en direction de la première section (2).

34. Pièce d'extrémité de branche selon la revendication 32 ou 33, caractérisée en ce que l'élément élastique est un ressort à tube enroulé (70).

35. Pièce d'extrémité de branche selon l'une des revendications 30 à 34, caractérisée en ce que la section d'appui (10) est reliée en sa partie centrale (26) à la section de liaison (6).

**Claims**

1. Side arm end-piece for a side arm of a spectacle frame, having a first section (2) which is essentially straight and extends horizontally in the longitudinal direction of the side arm, and having a connection section (6), which extends essentially downwards from one end of the first section, and having an elongated resting section (10) which is intended to rest between head and ear and is attached to the connection section, characterized in that the resting section (10) projects freely over at least half its total length (L) in a direction towards the first section (2) and is connected to the connection section (6) at its bottom end by means of a transition region (12), in that the transition region (12) or the region of the connection section (6) or of the resting section (10) merging into said transition region is constructed as an additional spring region (16) or as a spring element (54, 56, 60; 70) in such a way that the resting section (10) can be swivelled in the spring joint formed by the spring region or the spring element, and in that the connection section (6) is relatively more rigid than the resting section (10).

2. Side arm end-piece according to Claim 1, characterized in that the resting section (10) is constructed so as to be curved in a bow shape, the inside of the curve facing forwards towards the ear.

3. Side arm end-piece according to Claim 2, characterized in that the resting section (10) is curved additionally transversely in relation to the bow-shaped curve.

4. Side arm end-piece according to one of Claims 1 to 3, characterized in that the resting section (10) is a resilient element in the manner of a leaf spring.

5. Side arm end-piece according to Claim 4, characterized in that the resting section (10) has different rigidities over its length.

6. Side arm end-piece according to one of Claims 1 to 5, characterized in that at least one free end (14, 62) of the resting section (10) is thickened.

7. Side arm end-piece according to one of Claims 1 to 6, characterized in that the elongated resting section (10) has a circular or oval profile.

8. Side arm end-piece according to one of Claims 1 to 7, characterized in that the connection section (6) is constructed so as to be curved in a bow shape.

9. Side arm end-piece according to Claim 8, characterized in that the inside of the curve faces forwards towards the ear.

10. Side arm end-piece according to Claim 8, characterized in that the inside of the curve faces backwards away from the ear.

11. Side arm end-piece according to one of Claims 1 to 10, characterized in that the connection section (6) gradually tapers starting from its top end connected to the first section (2).

12. Side arm end-piece according to one of Claims 1 to 11, characterized in that the connection section (6) is a resilient element in the manenr of a leaf spring.

13. Side arm end-piece according to one of Claims 1 to 12, characterized in that the spring region (16) is a region of reduced cross-sectional area.

14. Side arm end-piece according to one of Claims 1 to 13, characterized in that, near to its top end connected to the first section (2), the connection section (6) has a spring region (18) which is relatively less rigid than the central region (20) of the connection section.

15. Side arm end-piece according to Claim 14, characterized in that the spring region (18) near to the top end is a region of a reduced cross-sectional area.

16. Side arm end-piece according to one of Claims 1 to 15, characterized in that the first section (2) and the connection section (6) are constructed integrally.

17. Side arm end-piece according to Claim 16, characterized in that the transition region (8) connecting the first section (2) to the connection section (6) at the ends of these sections has a bow-shaped contour.

18. Side arm end-piece according to Claim 17, characterized in that the transition region (8) between the first section (2) and the connection section (6) is flattened in such a way that the flattening lies essentially in the plane defined by the first section (2) and the connection section (6).

19. Side arm end-piece according to Claim 17 or 18, characterized in that the transition region (8) between the first section (2) and the connection section (6) is provided with a slot (34) following the curve of the transition region.

20. Side arm end-piece according to Claim 19, characterized in that an insert made of elastic material is inserted in the slot (34).

21. Side arm end-piece according to one of Claims 16 to 20, characterized in that the transition region (8) between the first section (2) and the connection section (6) is constructed as a spring region.

22. Side arm end-piece according to one of Claims 1 to 21, characterized in that the connection section (6) and the resting section (10) are constructed integrally.

23. Side arm end-piece according to Claim 22, characterized in that the transition region (12) connecting the connection section (6) to the resting section (10) at the ends of these sections has a bow-shaped contour.

24. Side arm end-piece according to Claim 23, characterized in that the transition region (12) between the resting section (10) and the connection section (6) is flattened in such a way that the flattening lies essentially in the plane defined by the resting section (10) and the connection section (6).

25. Side arm end-piece according to one of Claims 23 or 24, characterized in that the transition region (12) between the resting section (10) and the connection section (6) is provided with a slot (38) following the curve.

26. Side arm end-piece according to Claim 25, characterized in that an insert made of elastic material is inserted in the slot (38).

27. Side arm end-piece according to one of Claims 1 to 21, characterized in that the connection section (6) and the resting section (10) are separately produced parts.

28. Side arm end-piece according to Claim 27, characterized in that the connection section (6) and the resting section (10) are connected with the aid of a pin (42) and a pin bore hole (44), in which the pin is inserted, the pin being constructed on one of the two parts (connection section or resting section) and the pin bore hole on the other one of the two parts.

29. Side arm end-piece according to Claim 27, characterized in that the pin bore hole (44) is a passage bore hole on the resting section (10), and in that the pin (42) is formed by the bottom end region (36) of the connection section (6).

30. Side arm end-piece according to Claim 27, characterized in that the connection section (6) and the resting section (10) are interconnected with the aid of a ball joint (54, 56).

31. Side arm end-piece according to Claim 30, characterized in that an elastic annular element (60), which is essentially concentric to the ball joint (54, 56), is inserted between the two parts (connection section (6) and resting section (10)).

32. Side arm end-piece according to Claim 22 or 27, characterized in that the connection section (6) and the resting section (10) are interconnected with the aid of a cylindrical spring element (70).

33. Side arm end-piece according to Claim 31, characterized in that the longitudinal axis of the spring element (70) extends essentially in the direction of the first section (2).

34. Side arm end-piece according to Claim 32 or 33, characterized in that the spring element is a corrugated tube spring (70).

35. Side arm end-piece according to one of Claims 30 to 34, characterized in that the resting section (10) is connected in its central region (26) to the connecton section (6).

Fig. 1

Fig. 2

Fig. 3

Fig. 4

Fig. 5

Fig. 6

8  2  4

14

6
20

Fig. 7

10

60  26

56
36

66

12  54  58

64

62

Fig. 8

6
54
36  10
26
56

12  68  58

5

Fig. 9

Fig. 10